# EUROPEAN PATENT APPLICATION

(11) **EP 4 787 331 A1**
(43) Date of publication of application: **05.08.2026**
(21) Application number: 25305162.7
(22) Date of filing: 04.02.2025
(51) Int. Cl.: G06V 10/26, G06T 7/11, G06T 7/174, G06V 10/764, G06V 10/774, G06V 10/82, G06N 3/08

(54) **AUTO-COMPLETED SEGMENTATION OF MEDICAL IMAGES**

(71) Applicant: Dassault Systèmes, 78140 Vélizy-Villacoublay (FR)
(72) Inventor: Ben Mabrouk, Souheib, 78140 Vélizy-Villacoublay (FR); Ndoko, Arthur, 78140 Vélizy-Villacoublay (FR)
(74) Representative: Bandpay & Greuter

(57) **Abstract**

The disclosure notably relates to a computer-implemented method for annotating a set of medical images of at least one anatomical target of a same patient. The method comprises: obtaining at least one query from the set of medical images, each query being an unannotated 2D slice of a medical image; obtaining a support from the set of medical images, the support comprising a set of pairs, each pair comprising a 2D slice of the medical image and a respective 2D annotation; obtaining a pre-trained few-shot model being configured: for taking as input at least one query and a support; and for outputting, based on the inputted support, a 2D annotation associated with the inputted at least one query. The method also comprises predicting, by using the pre-trained few-shot model, a 2D annotation associated with the obtained at least one query.

## Description

### TECHNICAL FIELD

The disclosure relates to the field of computer programs and systems, and more specifically to a method, system and program for annotating a set of medical images of at least one anatomical target of a same patient.

### BACKGROUND

Several widely used medical imaging techniques and scanning technologies such as Computed Tomography Scan (CT-scan), Magnetic Resonance Imaging (MRI) and Positron Emission Tomography (PET) provide 3D acquisitions of the anatomical target of a patient. The output of these medical imaging exams are usually vertical stacks of 2D image slices that represent the patient's anatomical target.

The use of a set of medical images to cover the same area of a patient is nowadays very common in medical applications to observe certain types of structures on the anatomical target of a same patient. In that case, the medical imaging examination may comprise annotations and segmentations of a set of medical images.

An annotation of a medical image refers to any type of spatial indication manually or automatically added to describe, enrich or analyze the medical image. Examples of annotations may comprise measurements of elements of the images and any type of indications of a region of interest (boxes, arrows) with associated labels. The annotation of a medical image may help in identifying and categorizing different parts of the anatomical target, such as marking a region as a tumor or labeling a region of interest as showing a specific condition. For instance, annotations may mark the location and size of a tumor in a medical image obtained by an MRI scan or labeling a bone fracture in a medical image obtained by an X-ray scan.

The process of annotating medical images is useful for medical analysis, medical research, and machine learning applications. For example, dataset containing annotations of medical images may be used for training machine learning models to identify and/or analyze specific medical conditions, to assist in diagnosis and to plan clinical treatments.

A segmentation of a medical image refers to partitions or segments of an area of interest of a medical image. A segmentation may be a type of annotation. A segmentation may also exploit an annotation previously performed in an area of interest of a medical image.

The process of segmenting a medical image may comprise partitioning the medical image into multiple segments to isolate and analyze specific regions or structures of interest within the image. The segmentation of a medical image may provide a detailed and precise outline of structures, such as (automatic and/or semiautomatic) measurements of organs, tumors, or lesions, at the pixel level.

The task of annotation and the task of segmentation of medical images are time-consuming processes. In average, it takes around 10 minutes to an expert in medical imaging to annotate and segment a single tumor lesion in a 3D medical image. Moreover, the results depend on the experience and expertise of the medical operator (e.g., a radiologist). Otherwise said, the results of annotation and segmentation of the medical images may change considerably from one medical operator to another one, according to their experience in the field and/or their expertise with the medical imagining technology.

Within this context, there is still a need for an improved method for annotating a set of medical images of at least one anatomical target of a same patient.

### SUMMARY

It is therefore provided a computer-implemented method for annotating a set of medical images of at least one anatomical target of a same patient, the method comprising:
- obtaining at least one query from the set of medical images, each query being an unannotated 2D slice of a medical image;
- obtaining a support from the set of medical images, the support comprising a set of pairs, each pair comprising a 2D slice of the medical image and a respective 2D annotation;
- obtaining a pre-trained few-shot model being configured:
   -- for taking as input at least one query and a support; and
   -- for outputting, based on the inputted support, a 2D annotation associated with the inputted at least one query; and
- predicting, by using the pre-trained few-shot model, a 2D annotation associated with the obtained at least one query.

The method for annotating a set of medical images of at least one anatomical target of a same patient may comprise one or more of the following features:
- performing the predicting for each query obtained from the set of medical images, thereby obtaining a respective 2D annotation for each query;
- wherein the set of pairs comprises at least 2 pairs, preferably at least 8 pairs, more preferably 8 pairs;
- obtaining a support comprises selecting:
   -- a first 2D slice and a last 2D slice of the medical image, the first and last 2D slices representing an upper and a lower part of the at least one anatomical target; and/or
   -- a first 2D slice, a middle 2D slice and a last 2D slice of the medical image, the middle 2D slice being in-between the first and the last 2D slices, the first, middle and last 2D slices representing an upper, an intermediate and a lower part of the at least one anatomical target; and/or
   -- a substantially uniformly distributed set of 2D slices of the medical image;
- the set of medical images are 2D slices of a 3D representation of the at least one anatomical target of the same patient;
- the 3D representation of the at least one anatomical target of the same patient is obtained from medical scanning technologies;
- the respective 2D annotation comprises a manual and/or automatic annotation; and/or
- the 2D annotation may comprise a segmentation mask.

It is further provided a computer-implemented method of use of the method for annotating a set of medical images of at least one anatomical target of a same patient, for computing a 3D segmentation mask of a medical image from the predicted 2D annotations, the computer-implemented method of use comprising:
- obtaining at least one predicted 2D annotation;
- aggregating the obtained at least one predicted 2D annotation with the 2D annotation(s) of the obtained support, thereby obtaining aggregated 2D annotations, the aggregated 2D annotations being an ordered collection of the obtained at least one predicted 2D annotation and the 2D annotation(s) of the obtained support; and
- computing a 3D segmentation mask of the set of medical images by stacking orthogonally the aggregated 2D annotations.

The method of use may comprise one or more of the following features:
- post-processing the computed 3D segmentation mask; and/or
- the post-processing the computed 3D segmentation mask comprises resizing the computed 3D segmentation mask and/or smoothing boundaries of the computed 3D segmentation mask and/or filtering components of the computed 3D segmentation mask.

It is further provided a 3D segmentation mask computed by performing the method of use.

It is further provided a computer program comprising instructions which, when the program is executed by a computer, cause the computer to perform the methods.

It is further provided a computer readable storage medium having recorded thereon the computer program.

It is further provided a system comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows a flowchart of an example of the method for annotating a set of medical images;
- FIG. 2 shows a flowchart of an example of the method for computing a 3D segmentation mask of a medical image;
- FIG.s 3 to 7 illustrate the methods; and
- FIG. 8 shows an example of the system.

### DETAILED DESCRIPTION

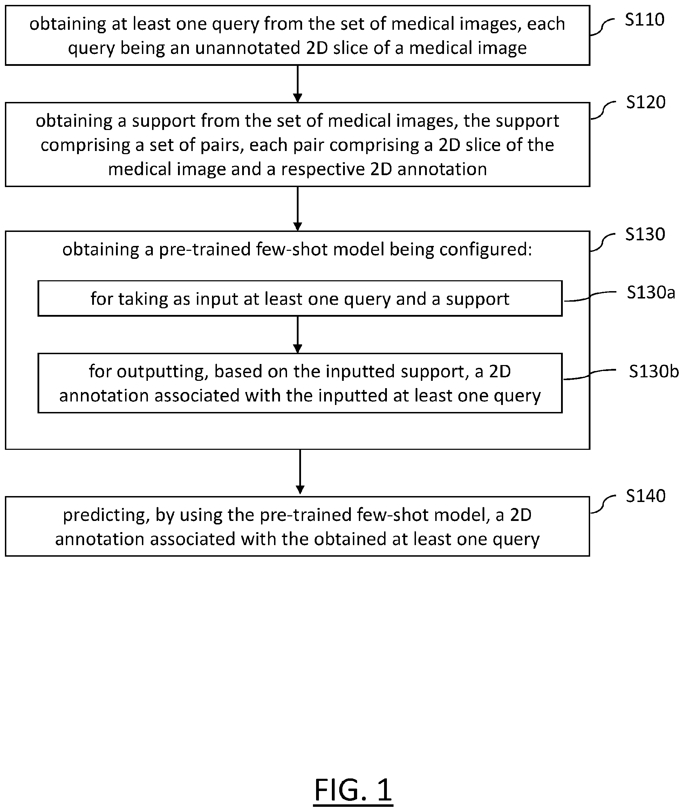

With reference to the flowchart of FIG. 1, it is proposed a computer-implemented method for annotating a set of medical images of at least one anatomical target of a same patient, hereinafter referred to as "annotating method"

The annotating method comprises obtaining at least one query from the set of medical images. The query is an input data that a few-shot model evaluates after being trained on a training dataset. In other words, the query is a new, unseen data that the few-shot model may process based on what the model learned during the training phase. The training dataset may contain medical images and annotations that are similar to the ones on which the few-shot model is intended to be used during the inference phase. By "similar", it is meant that the training dataset of the few-shot model contains medical images acquired by the same modalities (e.g., a CT scan, an MRI, or a PET) as those processed at the inference phase.

Each query is an unannotated 2D slice of a medical image. An unannotated 2D slice of a medical image may be an image taken from a medical imaging modality, such as MRI, CT, X-ray or ultrasound technology, without any added labels, markers, or segmentation. The unannotated 2D slice of a medical image may be an image representing a cross-sectional view of a part of the anatomical target. Thus, the unannotated 2D slice of a medical image may show the anatomical structures of the anatomical target (e.g., a tumor, a lesion of an organ) as captured by the medical imaging modality.

The annotating method also comprises obtaining a support from the set of medical images. The support is an input data that a few-shot model evaluates for guiding the few-shot model in the specific task to be performed (i.e., 2D annotation of the obtained at least one query). The support may contain a few labelled data (e.g., annotated images).

The support comprises a set of pairs, each pair comprises a 2D slice of the medical image and a respective annotation. The respective annotation may comprise a spatial annotation to localize and identify a target or an area of interest in the medical image. The respective annotation may also comprise a bounding volume for drawing an enclosing shape around an area of interest such as tumors, lesions, organs to indicate their locations; the bounding volume may be a bounding box for drawing a quadrilateral, such as a rectangle, a square, a parallelogram, around the area of interest. The pair may comprise one or more respective 2D annotations. The respective annotation may further comprise masks for pixel-level annotations outlining shapes and borders of the anatomical target, key points for indicating anatomical landmarks on the anatomical target, and/or arrows pointing to an area of interest of the anatomical target.

The annotating method further comprises obtaining a pre-trained few-shot model. A few-shot model refers to a machine learning model capable of generalizing from a very small number of examples (shots) per class or task. This overcomes traditional models that typically require large amounts of labeled data to achieve good performance. For this reason, few-shot learning is particularly useful in scenarios where obtaining extensive labeled data is difficult or expensive. The few-shot model is configured (e.g., by a pre-training phase) for taking as input at least one query and a support and for outputting, based on the inputted support, a 2D annotation associated with the inputted at least one query.

The annotating method furthermore comprises predicting, by using the pre-trained few-shot model, a 2D annotation associated with the obtained at least one query.

Such an annotating method forms an improved solution for annotating a set of medical images of at least one anatomical target of a same patient. The annotating method, moreover, enables an auto-completion annotation (comprising segmentation masks) of the at least one anatomical target, thus improving clinical outcomes.

Notably, the annotating method of the present disclosure features and exploits a pre-trained few-shot model for annotating medical images of one or more anatomical targets of a same patient. Indeed, the employ of the pre-trained few-shot model significantly accelerates the annotation and segmentation workflow by reducing the manual burden on radiologists and other medical practitioners. Otherwise said, the annotating method of the present disclosure reduces the time required to annotate and segment anatomical targets of a same patient in the practice of medical imaging.

A known in the art, a few-shot model is a machine learning model configured (i.e., trained) to perform tasks in scenarios where only a few data samples are available. Indeed, the few-shot model learns to imitate the support (i.e., the few data samples provided as input to the model) in order to infer a prediction for the query. This is particularly useful in scenarios where obtaining a large annotated dataset is impractical, impossible or too expensive, such as in the context of medical imaging. The training phase of a few-shot model follows the query-support paradigm. During the training phase, the few-shot model takes as input at least one query and a support, and outputs the expected prediction (e.g., a 2D annotation of the at least one query). The expected prediction is then compared with ground truth data to evaluate a loss function. The samples contained in the support may be randomly chosen from a training dataset or chosen from a restricted subset containing samples dedicated to the scope of the few-shot model. Moreover, the pre-trained few-shot model is designed to perform multiple tasks, eliminating the need for separate models for each task. This means only one training session is required, and only one model needs to be stored in the memory of the system executing the annotating method, thus decreasing the overall size in the memory with respect to traditional models. This approach simplifies both the deployment and usage of the model, as there's no need to select a task-specific model.

The approach of the annotating method, moreover, leverages the consistency and the similarity of a same patient's anatomical target to enhance annotation and segmentation of the respective medical images. Indeed, the method predicts a 2D annotated segmentation mask for each slice of the unannotated subset of slices by feeding these unannotated slices as query to a pre-trained few-shot segmentation model and using the limited subset of annotated 2D slices as support. In other words, the method enables an accurate and complete annotation (i.e., segmentation) of the of the anatomical target of a patient from a limited subset of annotated 2D slices (i.e., the support). Then, the remaining subset of unannotated slices are automatically annotated and segmented by the method. Overall, the annotating method enables to obtain a complete, precise and fast annotated segmentation mask of the anatomical target with significantly few manual annotations, thereby improving the annotation and segmentation of anatomical targets in 3D medical images acquisition from a same patient.

The annotating method, moreover, amounts to a data-driven approach being based on the inputted support and on a small training dataset. The inputted support, containing annotated 2D slices of the medical image of at least one anatomical target of a same patient, has the role to guide the few-shot model to understand the specific task to be performed and to identify the context of the anatomical target. This data-driven feature of the few-shot model makes the method versatile with regard to the shape and the appearance of the anatomical target to be annotated and to be segmented. In other words, the annotating method adapts its predictions based on the inputted support and leverages the consistency and similarity of a same patient's anatomical target to enhance precise annotation and segmentation of the obtained query data.

The annotating method may comprise one or more of the following features.

The annotating method may further comprise performing the predicting for each query obtained from the set of medical images, thereby obtaining a respective 2D annotation for each query.

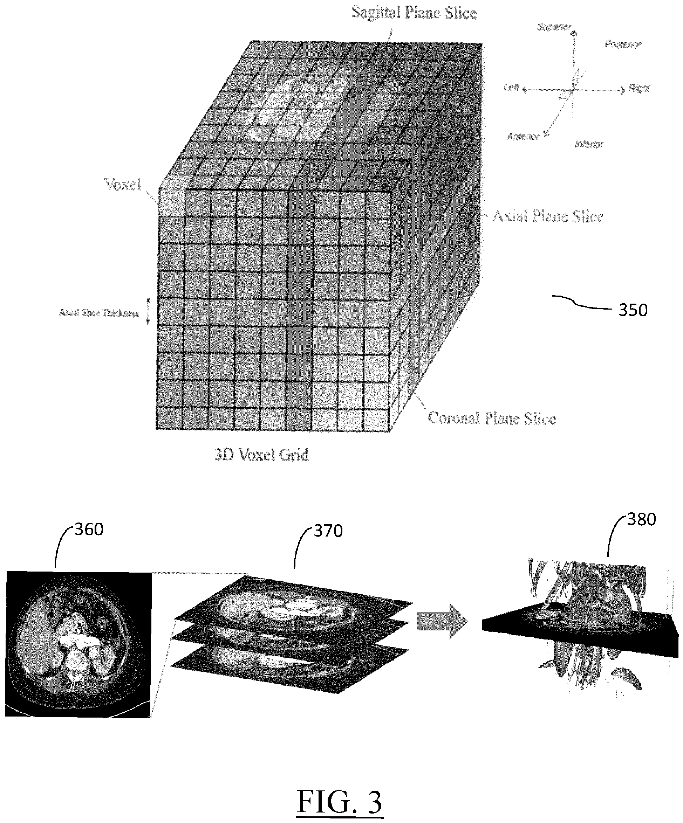

FIG. 3 shows an example of volume data or 3D voxel grid 350. A volume data is a three-dimensional dataset obtained, e.g., from CT or MRI scans. The volume data may comprise a set of 2D slices, each 2D slice being obtained by "slicing" the volume data. Volume data allows for a more comprehensive visualization and analysis of anatomical structures and disease processes. The unit of the volume data is a voxel (i.e., volume pixel), representing a value (e.g., a discrete value) on a regular 3D grid. Sections of the volume data may comprise an axial plane slice, a coronal plane slice, and a sagittal plane slice of at least one anatomical target of a same patient.

The annotating method comprises obtaining at least one query from the set of medical images. The query may be represented by data that refers to unannotated 2D slices within the same volume data 350, and which is intended to be segmented automatically by the method of the present disclosure.

The annotating method comprises obtaining a support from the set of medical images.

The support refers to at least one 2D slice of the (e.g., 3D) medical acquisition, each 2D slice being associated with a respective 2D annotation (e.g., a segmentation). With reference to FIG. 3, a 2D slice of the medical image with a respective 2D annotation may be represented by the 2D segmentation 360 (sometimes referred to as annotated 2D slice). A 2D segmentation may be associated with a 2D segmentation mask, which is represented by a 2D grid of discrete (e.g., binary) values. Likewise, a 3D segmentation may be associated with a 3D segmentation mask, which is represented by a 3D grid of binary values. Each cell of the 2D grid may correspond to a pixel; each cell of the 3D grid may correspond to a voxel. The cell of the grids may contain discrete values, such as the binary value "0" or the binary value "1" depending on which region, as determined by the segmentation, the respective pixel (for 2D grid) or voxel (for 3D grid) belongs to.

In examples, the respective 2D annotation may comprise a manual and/or automatic annotation. A manual annotation may be performed by means of an haptic device such as a mouse, a digital pencil, a touch screen; the user (that may be also referred to expert annotator) may draw/note the annotation directly on the medical image that is presented to him. An automatic annotation of the support may be performed by means of a dedicated software (e.g., comprising a segmentation algorithm) for medical imaging annotation. The automatic annotation by a dedicated software accelerates the annotation process of the support, e.g. in case the manual annotation per slice is significantly time consuming. Alternatively, the automatic 2D annotation of the support may be performed with the annotating method of the present disclosure, e.g. to obtain a time gain. The dedicated software analyses the medical image and adds the annotation to the medical image; the annotation may be directly stored with the (computer-readable) file containing the data of the medical image, or alternatively, the annotation may be stored in a (computer-readable) file distinct of the file containing the data of the medical image. The respective 2D annotation of the support may comprise, at the same time, a manual and automatic annotation. For example, the user may annotate manually by means of a haptic device by indicating two points on the medical image and then the dedicated software may automatically draw the line passing through the two points and assigning a length value.

The respective 2D annotation may also be a (automatic and/or manual) segmentation. A segmentation may highlight (e.g., in colors) specific regions of interest within the original medical image. The segmentation may delineate anatomical structures, tissues, or pathological areas, such as organs or tumors. Each pixel in the associated segmentation mask may correspond to a pixel in the original medical image, with discrete values indicating different segments or classes and additional values (e.g., labels) indicating the color, the type of organ, the type of lesion and similar additional data characterizing the segmentation.

The support comprises a set of pairs. In examples, the set of pairs may comprise at least 2 pairs, preferably at least 8 pairs, more preferably 8 pairs. This limited support set allows the pre-trained few-shot model to imitate the specific task of annotating. In other words, the annotating method achieves the prediction of a 2D annotation associated with the obtained at least one query by being guided from said limited support set.

Each pair comprises a 2D slice of the medical image and a respective 2D annotation. Each pair may comprise a 2D slice of the medical image and one or more respective 2D annotations.

The obtaining a support may comprise selecting i) a first 2D slice and a last 2D slice of the medical image and/or ii) a first 2D slice, a middle 2D slice and a last 2D slice of the medical image and/or iii) a substantially uniformly distributed set of 2D slices of the medical image.

In case i), the first and last 2D slices may represent an upper and a lower part of the at least one anatomical target. The at least one anatomical target may be oriented in a standard cartesian system in 3D, wherein each 2D slice may lie on a plane (such as the axial plane defined by the standard x axis and the standard y axis) and each 2D slice may be identified by a value of the axis perpendicular to the plane (such as the standard z axis being perpendicular to the plane defined by the x-y axes). The upper part of the at least one anatomical target refers to the top section or region (i.e., the topmost portion) of the at least one anatomical target, i.e., the upper part of the at least one anatomical target is the 2D slice with the highest value of the axis perpendicular to the plane where the 2D slice lies. The lower part of the at least one anatomical target refers to the bottom section or region (i.e., the bottommost portion) of the at least one anatomical target, i.e., the lower part of the at least one anatomical target is the 2D slice with the lowest value of the axis perpendicular to the plane where the 2D slice lies.

In case ii), the middle 2D slice may be in-between the first and the last 2D slices. The first, middle and last 2D slices may represent an upper, an intermediate and a lower part of the at least one anatomical target. The intermediate part of the at least one anatomical target is the 2D slice with a value of the axis perpendicular to the plane where the intermediate 2D slice lies between the respective values of the upper part and lower part.

In case iii), the method may comprise selecting the 2D slices of the medical image every predetermined number of 2D slices of the medical image. For example, the method may comprise selecting a 2D slice every five, ten or fifteen 2D slices of the medical image.

The set of medical images may be 2D slices of a 3D representation of the at least one anatomical target of the same patient. The method may comprise obtaining 2D slices from a 3D representation of the at least one anatomical target of the same patient. The obtaining may comprise acquiring a 3D volumetric dataset representing the at least one anatomical target; selecting a slice plane in which obtain a respective 2D slice, the slice plane may be either an axial plane, a coronal plane, or a sagittal plane; extracting each respective 2D slice. In case of a standard cartesian system defined by x, y, z axes, the axial plane may be a horizontal to the x-y plane, the coronal plane may be a plane parallel to the y-z plane, the sagittal plane may be a plane parallel to the x-z plane.

The 3D representation of the at least one anatomical target of the same patient may be obtained from medical scanning technologies such as CT, MRI, or PET scans.

The 2D annotation (e.g., the respective 2D annotation, the annotated 2D slice, the predicted 2D annotation) may comprise a segmentation mask (e.g., a 2D segmentation mask).

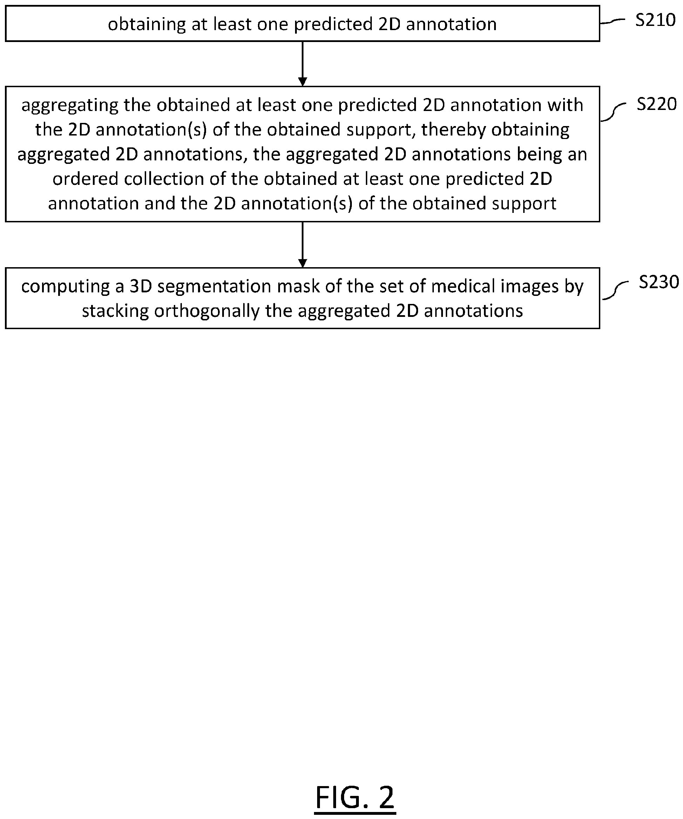

With reference to the flowchart of FIG. 2, it is proposed a computer-implemented method of use of the annotating method of the present disclosure. The method of use is hereinafter referred to as the "segmenting method". The segmenting method is a method for computing a 3D segmentation mask of a medical image from the predicted 2D annotations.

The predicted 2D annotation may be the 2D annotation, associated with the obtained at least one query, predicted at S140 by the pre-trained few-shot model of the annotating method. With reference to FIG. 3, a predicted 2D annotation may be the 2D segmentation 360.

The segmenting method comprises aggregating the obtained at least one predicted 2D annotation with the 2D annotation(s) of the support. Here aggregating means combining the predicted annotations (e.g., the predicted masks) for the query image with the annotations (e.g., the masks) of the support images. The aggregating thereby results in aggregated 2D annotations. The aggregated 2D annotations are an ordered collection of the obtained at least one predicted 2D annotation and the 2D annotation(s) of the obtained support.

By "ordered collection" is meant that the aggregating is performed in a specific sequence. For example, the aggregating may comprise normalizing data representing the 2D annotation to ensure all 2D annotations are in a consistent format and coordinate system, e.g., using geometric techniques.

The segmenting method further comprises computing a 3D segmentation mask of the set of medical images by stacking orthogonally the aggregated 2D annotations.

Such a segmenting method amounts to an improved solution for computing a 3D segmentation mask of a medical image from the predicted 2D annotations.

Notably, the segmenting method of the present disclosure leverages 2D annotations to compute a complete 3D segmentation mask of the anatomical target. In particular, the computed 3D segmentation mask helps localizing tumors and lesions in organs before a surgical event.

The segmenting method may further comprise post-processing the computed 3D segmentation mask. The post-processing may comprise refining and improving the computed 3D segmentation mask to enhance accuracy and/or usability.

The post-processing of the computed 3D segmentation mask may comprise resizing the computed 3D segmentation mask and/or smoothing boundaries of the computed 3D segmentation mask and/or filtering components of the 3D segmentation mask. The post-processing of the computed 3D segmentation amounts to a refinement and improvement of the accuracy and quality of the segmentation regions. In other words, the post-processing improves robustness of the 3D segmentation, as it reduces errors by integrating multiple segmentation results (query and support), it improves consistency by aligning predictions with patterns in the support set for coherent outputs, it handles ambiguities by leveraging more reliable data from the support. In yet other words, the post-processing ensures that the computed 3D segmentation mask may be reliable to be used in clinical and medical applications, because post-processing improves the spatial coherence of the computed 3D segmentation mask along the axis perpendicular to the slices on which the segmentation was performed. The resizing may comprise modifying the spatial dimensions of the computed 3D segmentation mask, and/or its resolution, and/or its voxel size to meet specific requirements. The smoothing may comprise applying spatial filters (e.g., Gaussian smoothing) to create smoother transitions in the segmentation boundaries. This allows removing the jagged edges that are undesirable. The filtering components may be based on characteristics such as, but not limited to, retaining components above a specific voxel count for removing small noise or artifacts, considering voxel intensity values within the component, retaining components in specific regions of interest.

A 3D segmentation mask computed by the segmenting method of the present disclosure may be represented, e.g., by the 3D segmentation mask 380 in FIG. 3. The 3D segmentation mask computed by the segmenting method amounts to a better visualization than any 2D segmentation mask, because the 3D segmentation mask features anatomical relations otherwise hidden in a 2D segmentation mask. Moreover, the 3D segmentation mask enables integration with technologies such as 3D printing and augmented reality, which are useful in surgical planning, training and education.

An example of implementation of the annotating method and the segmenting method is now provided.

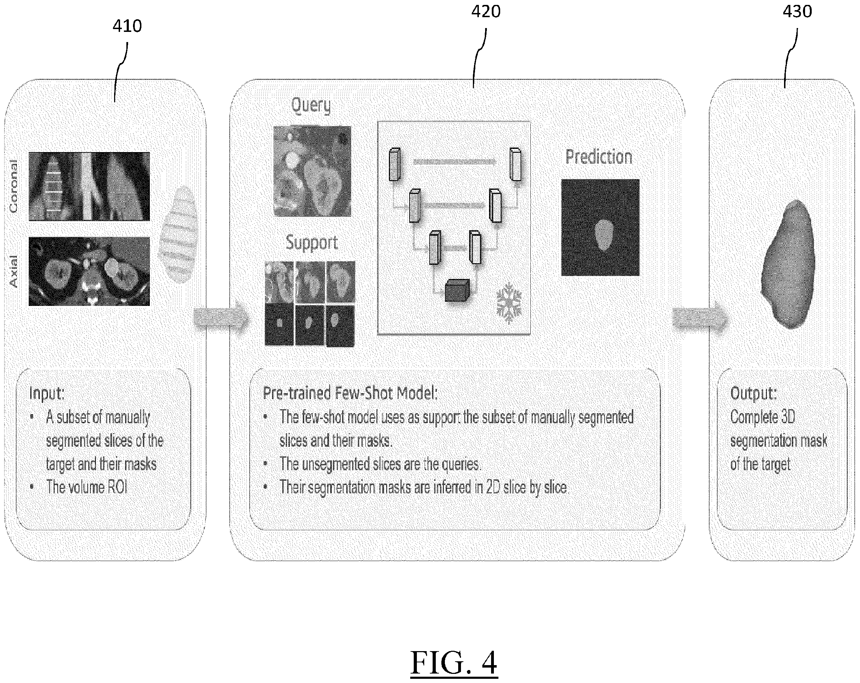

FIG. 4 shows an example of pipeline featuring the annotating method and the segmenting method. The pipeline features three main blocks: a first block 410, a second block 420, and a third block 430. The first block 410 may comprise the acquisition and the preparation of the inputs to be used for the annotating method. The second block 420 may comprise the execution of the annotating method. The third block 430 may comprise the execution of the segmenting method.

A detailed description of the first block 410 is now provided.

At the very beginning, a medical practitioner, a radiologist or any expert in the field of medical imaging loads a set of medical images. The acquisition of the set of medical images may be from medical scanning technologies such as CT, MRI, or PET scans. The set of medical images contains at least one anatomical target of a same patient. The anatomical target may be a tumorous lesion, an organ, a tissue that the medical practitioner or radiologist intends to annotate and segment.

The medical practitioner or radiologist may select and annotate a subset of at least one 2D slice within the set of medical images that contains the anatomical targets. The at least one 2D slice of the medical image and the respective 2D annotation may serve as the support data for the annotating method. The support data has the role to guide the annotating method to understand the specific task to be performed and the context of the anatomical target.

Optionally, the medical practitioner or radiologist may use pre-processing techniques such as cropping, windowing, background removal from the region of interest (ROI), denoising and/or resampling to prepare the support for the annotating method.

The remaining 2D slices of the set of medical images that have not been annotated by the medical practitioner or radiologist may serve as query data for the annotating method. The query data is intended to be annotated automatically by the annotating method.

A detailed description of the second block 420 is now provided.

Both the support data and the query data are input of the annotating method. More precisely, both the support data and the query data are input of a pre-trained few-shot model configured for taking as input at least one query and a support and for outputting, based on the inputted support, a 2D annotation associated with the inputted at least one query. The pre-trained few-shot model uses the support data to learn the relevant annotation and segmentation patterns in order to predict the 2D annotation associated with the obtained at least one query slice-by-slice.

A detailed description of the third block 430 is now provided.

Finally, the at least one predicted 2D annotation(s) are used as input for the segmenting method. The at least one predicted 2D annotation are aggregated with the 2D annotation(s) of the obtained support. The segmenting method computes the 3D segmentation mask of the set of medical images by stacking orthogonally the aggregated 2D annotations.

The medical practitioner or radiologist may have the option to apply post-processing steps (e.g., resizing of the interpolation mask, filtering of small connected components, etc.) to refine the computed 3D segmentation mask.

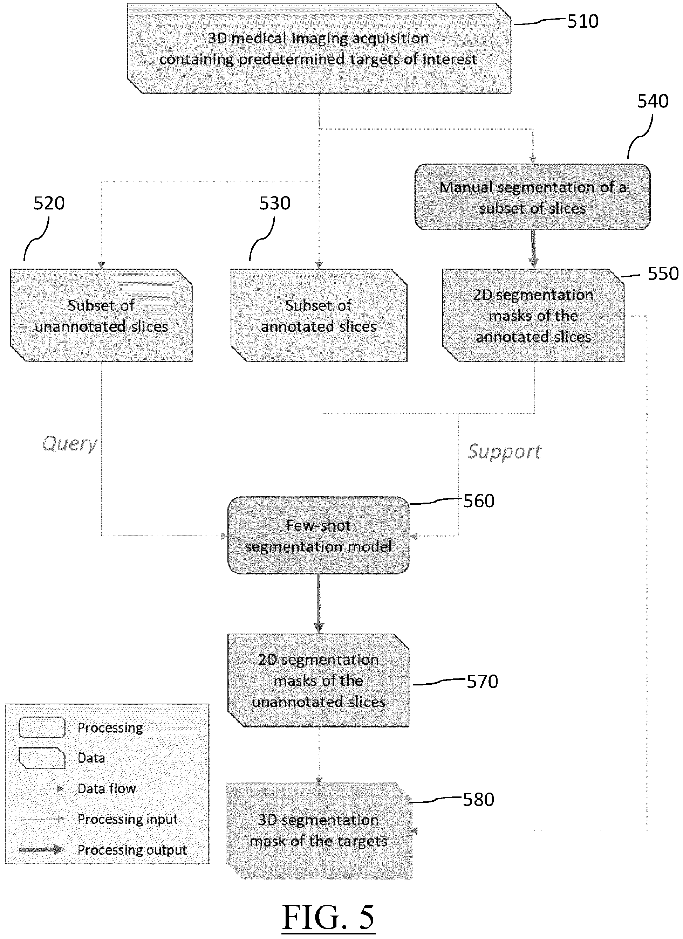

FIG. 5 shows a diagram representing an example of implementation of the solution of the present disclosure.

The solution may comprise the medical imaging acquisition 510 containing at least one anatomical target of a same patient. The acquisition is performed by an expert of medical imaging (e.g., a radiologist) by means of medical scanning technologies.

The medical imaging acquisition 510 may generate a set of medical images. A subset of these medical images is left unannotated, thereby forming a subset of unannotated slices 520. The complementary subset may contain annotated slices 530. One or more annotated slices may be manually segmented, thereby obtaining a 2D segmentation masks of annotated slices.

The subset of unannotated slices 520 may form the at least one query from the set of medical images.

The subset of annotated slices 530 with the respective 2D segmentation mask may form the support from the set of medical images.

Both query and support may be inputted in the pre-trained few-shot model 560 to predict (slice-wise) a 2D annotation (e.g., 2D segmentation mask) of the unannotated slices 570.

Finally, the predicted 2D annotations, after being aggregated with the 2D annotation(s) of the obtained support, may be inputted in the segmenting method to compute a 3D segmentation mask of the set of medical images containing the at least one anatomical target.

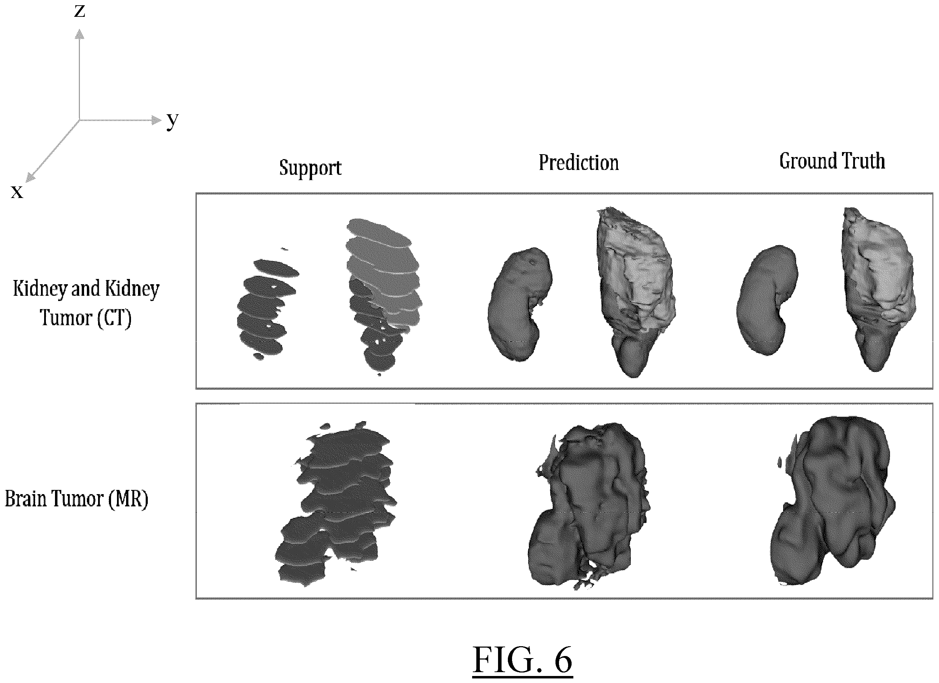

FIG. 6 shows qualitative results of the disclosed solution. In the top of FIG.6, it is shown the result of the annotating and segmenting methods for kidney (left) and kidney tumor (right). In both cases, the set of medical images has been obtained by a CT scan.

The support comprises between 5 and 10 annotated slices. The support comprises selecting a substantially uniformly distributed set of 2D slices of the medical image. Each 2D slice lies on the axial plane and may be identified by a value of the axis perpendicular to that plane (e.g., the z axis). The selected 2D slices are annotated and comprise the upper part, that refers to the topmost portion of the anatomical target with the highest value of the z coordinate, and the lower part, that refers to the bottommost portion of the anatomical target with the lowest value of the z coordinate. Between the topmost and the bottommost portions of the anatomical target, represented by a respective topmost 2D slice and a respective 2D bottommost 2D slice, there are 5 intermediate 2D slices for the kidney, 7 intermediate 2D slices for the kidney tumor, and 5 intermediate 2D slices for the brain tumor.

The predicted 2D annotations, upon aggregation with the obtained support, are inputted in the segmenting method to compute the 3D segmentation mask. A comparison between the prediction and the ground truth shows a remarkable qualitative similarity. A similar comparison is shown for a brain tumor at the bottom of FIG. 6

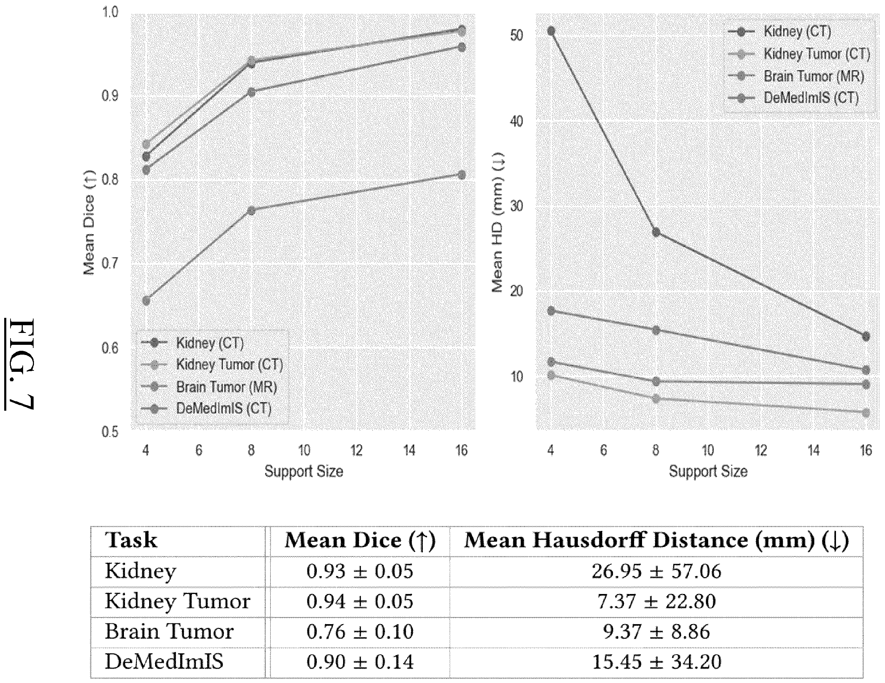

FIG. 7 shows quantitative results of the disclosed solution.

The Mean Dice metric is a measure used to gauge the similarity between two sets of data. The higher the value of the metric is, the more similar two sets of data are. From the plot on the left, and the corresponding numerical values in the table, the bigger the support size is, the more similar the computed 3D segmentation mask and the ground truth are.

The mean Hausdorff distance is another metric used to measure the similarity between two sets of points. The lower the value of the metric is, the more similar two sets of data are. From the plot on the right, and the corresponding numerical values in the table, the bigger the support size is, the more similar the computed 3D segmentation mask and the ground truth are.

The two quantitative results show that the disclosed solution is able to predict a 3D segmentation mask that is closer and closer to the ground truth when the support increases its size.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

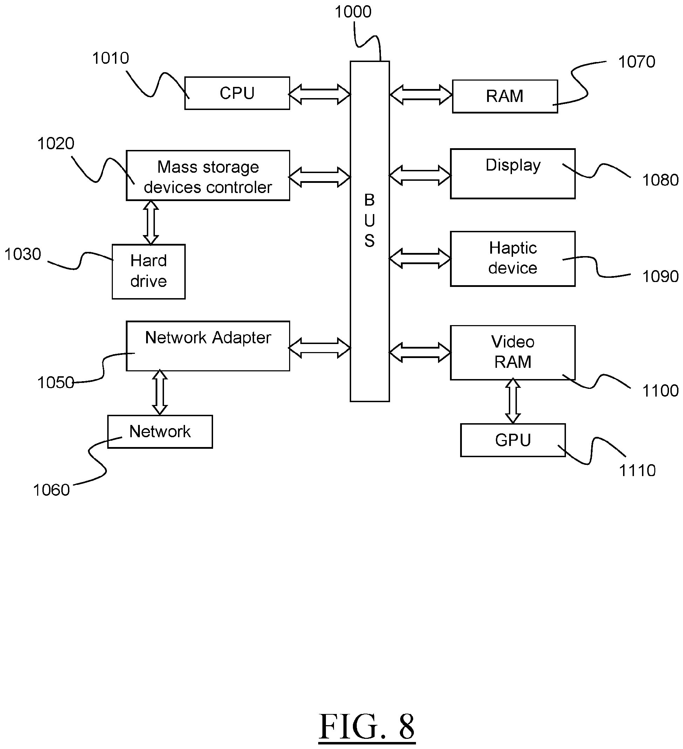

FIG. 8 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method for annotating a set of medical images of at least one anatomical target of a same patient (also referred to as "annotating method") and/or the method of use for computing a 3D segmentation mask of a medical image from the predicted 2D annotations (also referred to as "segmenting method") . The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. The steps of the method for annotating a set of medical images of at least one anatomical target of a same patient and/or the method of use for computing a 3D segmentation mask of a medical image from the predicted 2D annotations may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method(s). The computer program may alternatively be stored and executed on a server of a cloud computing environment, the server being in communication across a network with one or more clients. In such a case a processing unit executes the instructions comprised by the program, thereby causing the method(s) to be performed on the cloud computing environment.

## Claims

1. A computer-implemented method for annotating a set of medical images of at least one anatomical target of a same patient, the method comprising:
- obtaining (S110) at least one query from the set of medical images, each query being an unannotated 2D slice of a medical image;
- obtaining (S120) a support from the set of medical images, the support comprising a set of pairs, each pair comprising a 2D slice of the medical image and a respective 2D annotation;
- obtaining (S130) a pre-trained few-shot model being configured:
-- for taking (S130a) as input at least one query and a support; and
-- for outputting (S130b), based on the inputted support, a 2D annotation associated with the inputted at least one query; and
- predicting (S140), by using the pre-trained few-shot model, a 2D annotation associated with the obtained at least one query.

2. The computer-implemented method of claim 1, further comprising performing the predicting for each query obtained from the set of medical images, thereby obtaining a respective 2D annotation for each query.

3. The computer-implemented method of any one of claims 1 to 2, wherein the set of pairs comprises at least 2 pairs, preferably at least 8 pairs, more preferably 8 pairs.

4. The computer-implemented method of any one of claims 1 to 3, wherein obtaining a support comprises selecting:
- a first 2D slice and a last 2D slice of the medical image, the first and last 2D slices representing an upper and a lower part of the at least one anatomical target; and/or
- a first 2D slice, a middle 2D slice and a last 2D slice of the medical image, the middle 2D slice being in-between the first and the last 2D slices, the first, middle and last 2D slices representing an upper, an intermediate and a lower part of the at least one anatomical target; and/or
- a substantially uniformly distributed set of 2D slices of the medical image.

5. The computer-implemented method of any one of claims 1 to 4, wherein the set of medical images are 2D slices of a 3D representation of the at least one anatomical target of the same patient.

6. The computer-implementation of claim 5, wherein the 3D representation of the at least one anatomical target of the same patient is obtained from medical scanning technologies.

7. The computer-implemented method of any one of claims 1 to 6, wherein the respective 2D annotation comprises a manual and/or automatic annotation.

8. The computer-implemented method of any one of claims 1 to 7, wherein the 2D annotation may comprise a segmentation mask.

9. A computer-implemented method of use of the method according to claims 1 to 8, for computing a 3D segmentation mask of a medical image from the predicted 2D annotations, comprising:
- obtaining (S210) at least one predicted 2D annotation;
- aggregating (S220) the obtained at least one predicted 2D annotation with the 2D annotation(s) of the obtained support, thereby obtaining aggregated 2D annotations, the aggregated 2D annotations being an ordered collection of the obtained at least one predicted 2D annotation and the 2D annotation(s) of the obtained support; and
- computing (S230) a 3D segmentation mask of the set of medical images by stacking orthogonally the aggregated 2D annotations.

10. The computer-implemented method of claim 9, further comprising post-processing the computed 3D segmentation mask.

11. The computer-implemented method of claim 10, wherein the post-processing the computed 3D segmentation mask comprises resizing the computed 3D segmentation mask and/or smoothing boundaries of the computed 3D segmentation mask and/or filtering components of the computed 3D segmentation mask.

12. A 3D segmentation mask computed by performing the method of use of any one of claims 9 to 11.

13. A computer program product comprising instructions which, when the program is executed by a computer, cause the computer to perform the method of claims 1 to 8 and/or the method of claims 9 to 11.

14. A computer readable storage medium having recorded thereon a computer program of claim 13.

15. A system comprising a processor coupled to a memory, the memory having recorded thereon the computer program of claim 13.
